# EUROPEAN PATENT APPLICATION

(11) **EP 2 570 894 A1**
(43) Date of publication of application: **20.03.2013**
(21) Application number: 11780336.1
(22) Date of filing: 25.03.2011
(51) Int. Cl.: G06F 3/033, G06F 3/038, H04M 1/00, H04M 1/02

(54) **INFORMATION PROCESSING TERMINAL, TERMINAL OPERATION METHOD AND COMPUTER-READABLE MEDIUM**

(30) Priority: 12.05.2010 JP 2010110008
(71) Applicant: NEC Corporation, Tokyo 108-8001 (JP)
(72) Inventor: KUROSE, Takafumi, Tokyo 108-8001 (JP)
(74) Representative: Vossius & Partner
(86) International application number: PCT/JP2011/001758
(87) International publication number: WO 2011/142075

(57) **Abstract**

A display (1) and an information processing terminal body (2) are connected with each other by an elastic body (4) via a space (6) in which the display (1) is movable, and one of a function as a direction key and a function as a confirmation key is executed by a user pressing the display (1) with a finger. When a pressing force detector (5) detects perpendicular movement of the display (1) to a side of an upper surface of the information processing terminal body (2) and a sensor (3) detects sliding of the display (1) in any direction of a side wall surface of the information processing terminal body (2), the function as the direction key is executed when the moving distance detected by the sensor (3) exceeds a predetermined movement threshold, and the function as the confirmation key is executed when the moving distance is within the movement threshold. Accordingly, it is possible to allow the user to operate the display more intuitively and easily, and to prevent malfunction without disturbing compactness and the like while securing a maximum screen area.

## Description

### Technical Field

The present invention relates to an information processing terminal, a terminal operation method, and a computer readable medium, and more specifically, to an information processing terminal, a terminal operation method, and a computer readable medium for achieving an input operation method that can be preferably applied to a portable information processing terminal.

### Background Art

Recent information processing terminals, in particular, portable information processing terminals have been assumed to be used in various situations or conditions. Some examples in consideration of operability of the information processing terminals include information processing terminals including a touch panel display, a pointing device (e.g., a trackball, a track pad, a tablet, and a pen point), or a reader (e.g., a bar code reader and a camera), for example, not only a keyboard or a mouse.

Further, a "mobile communication device" disclosed in Japanese Unexamined Patent Application Publication No. 2001-189792 (PTL 1) proposes a technique for allowing a user to operate the device with one hand as one of various situations and conditions. According to this technique, a pointing device is arranged on the side of the rear surface of a case of an information processing terminal, and a user operates the pointing device with a finger, which allows the user to move a pointer on a display arranged on the side of the front surface of the case of the information processing terminal, or to select and confirm any of display items on the display.

### Citation List

### Patent Literature

PTL 1: Japanese Unexamined Patent Application Publication No. 2001-189792 (pp. 2-3)

### Summary of Invention

### Technical Problem

As described above, recent information processing terminals, in particular, portable information processing terminals have been used in various situations or the conditions, and easy operability is required.

Specific examples of the various situations or the conditions include, for example, a case in which a user uses the information processing terminal under a situation where the user cannot perform operation with delicate movement, a case in which the user can only operate the information processing terminal with one hand, and a case in which the user operates the information processing terminal with a hand that is not bare-handed. Therefore, development and sales of information processing terminals that allow the user to perform various operation methods with high operability have been strongly demanded. Further, it is required to secure a maximum screen area in a limited space for easy viewing of display while the information processing terminal is required to be compact. In order to achieve this, the size and the number of operation keys or operation buttons for input operations need to be as small as possible.

One of input/operation methods in the related information processing terminal to solve such problems includes, as described above, introduction of the touch panel or the pointing device. However, there still remain problems that the operation is still difficult or even impossible for a user with gloved hand, a user having large fingers, a user who is not good at delicate movement, or a user who is not good at fine movement. In addition, malfunction has been increasing as well.

Further, the touch panel has also problems that it does not react even when a user operates the touch panel with a gloved hand, or it is not sensitive to the operation by a user depending on the physical constitution of the user, or causes malfunction.

Another technique has been developed to display a map or move the display position using a pointing device associated with a direction key as a touch panel display. However, according to such a technique, instead of moving the pointing device to indicate a movement direction when the display position of the map is moved, a user simply pushes a position in the direction in which the user desires to move on the screen on which the map is displayed. Thus, the movement of the operation and the movement of the display screen do not accord with each other, and it is difficult for the user to understand the operation method. Accordingly, development of information processing terminals with high operability which can be treated more intuitively has been desired.

### (Object of the present invention)

The present invention has been made based on the aforementioned circumstances, and one exemplary object of the present invention is to provide an information processing terminal, a terminal operation method, and a computer readable medium for allowing a user to operate the display more intuitively and easily in various situations or conditions, and capable of preventing malfunction without disturbing compactness, lightness, and reduction in thickness while securing a maximum screen area.

### Solution to Problem

In order to solve the aforementioned problems, the information processing terminal, the terminal operation method, and the computer readable medium according to the present invention mainly employ the following characteristic structures.

(1) An information processing terminal at least comprising a display on an upper surface of an information processing terminal body, comprising an elastic body connecting a rear surface of the display and an upper surface of the information processing terminal body, and each side surface of the display and each side wall surface of the information processing terminal body opposed to each side surface of the display via a space in which the display is movable,
wherein the information processing terminal at least executes one of a function as a direction key and a function as a confirmation key by a user pressing the display with a finger, the direction key being to move a cursor on a display screen of the display and the display screen, and the confirmation key being to confirm selection on the display screen of the display.

(2) A terminal operation method according to the present invention is a terminal operation method in an information processing terminal at least comprising a display on an upper surface of an information processing terminal body, comprising providing a space between a rear surface of the display and an upper surface of the information processing terminal body, and each side surface of the display and each side wall surface of the information processing terminal body opposed to each side surface of the display to allow the display to be movable, and at least executing one of a function as a direction key and a function as a confirmation key by a user pressing the display with a finger, the direction key being to move a cursor on a display screen of the display and the display screen, and the confirmation key being to confirm selection on the display screen of the display.

### Advantageous Effects of Invention

According to the information processing terminal, the terminal operation method, and the computer readable medium of the present invention, the display itself has a function of the direction key to move the cursor position and the like on the display screen and a function of the confirmation key to confirm the selected item, which makes it possible to achieve the following effects.

The display arranged on the front surface of the information processing terminal body allows a user to operate the display more intuitively and easily in various situations or conditions, and is capable of preventing malfunction without disturbing compactness, lightness, and reduction in thickness while securing a maximum display screen area.

Further, since the display itself has the functions of the direction key and the confirmation key, it is possible for the user to determine the movement direction, the movement position, the selected item and the like with physical movement of a finger on the display. Thus, the user is able to operate the display even with a hand that is not bare-handed (e.g., gloved hand). Further, it is possible to achieve the user interface with high operability whose operation is intuitive for the user and is easy to perform.

Further, the whole display is used as the direction key and the confirmation key. Thus, as is different from operation buttons and operation keys in the related information processing terminals, the object of the operation by the user is not small, which eliminates the need of operation with fine movement. This solves the related problems of malfunction or difficulty in operations occurred in a user with large fingers or a user who is not good at fine movement or cannot perform fine movement at the same time. Further, this technique is expected to satisfy the requirements of universal design as well.

### Brief Description of Drawings

Fig. 1A is a front view showing an example of a structure of an information processing terminal according to the present invention;
Fig. 1B is a cross-sectional view showing an example of the structure of the information processing terminal according to the present invention;
Fig. 1C is a cross-sectional view showing an example of the structure of the information processing terminal according to the present invention;
Fig. 2A is a front view for describing an operation when a location near a center in a front surface side of a display of the information processing terminal shown in Fig. 1 is pressed by a finger;
Fig. 2B is a cross-sectional view for describing an operation when a location near the center in the front surface side of the display of the information processing terminal shown in Fig. 1 is pressed by a finger;
Fig. 3A is a front view for describing an operation when a location near the center in the front surface side of the display of the information processing terminal shown in Fig. 1 is pressed by a finger in an oblique direction to move the display to an upper direction;
Fig. 3B is a perspective view for describing an operation when a location near the center in the front surface side of the display of the information processing terminal shown in Fig. 1 is pressed by a finger in the oblique direction to move the display to the upper direction; and
Fig. 3C is a front view for describing an operation when a location near the center in the front surface side of the display of the information processing terminal shown in Fig. 1 is pressed by a finger in the oblique direction to move the display to the upper direction.

### Description of Embodiments

Hereinafter, a preferable exemplary embodiment of an information processing terminal, a terminal operation method, and a computer readable medium according to the present invention will be described with reference to the accompanying drawings. While the information processing terminal and the terminal operation method according to the present invention will be described in the following description, it is needless to say that such a terminal operation method may be executed as a terminal operation program that can be executed by a computer, or the terminal operation program may be recorded in a computer readable recording medium (computer readable medium).

### (Features of the present invention)

Prior to the description of an exemplary embodiment of the present invention, the outline of the features of the present invention will be described first. The present invention mainly has a feature that a display itself has a function of a direction key to move a cursor position or the like on a display screen and a function of a confirmation key to confirm the selected item. According to a slide operation of the display in any parallel direction along the upper surface of the information processing terminal, the direction key can be moved in any of all directions (left, right, up, down, and oblique) on the display screen.

Since the present invention includes the aforementioned functions, it is possible to achieve the information processing terminal, the terminal operation method, and the computer readable medium that allow a user to operate the display arranged on the front surface of the information processing terminal body more intuitively and easily in various situations or conditions, and is capable of preventing malfunction without disturbing compactness, lightness, and reduction in thickness while securing a maximum display screen area.

Further, since the display itself has the functions of the direction key and the confirmation key, it is possible for the user to determine the movement direction, the movement position, the selected item and the like with physical movement of a finger on the display. Thus, the user is able to operate the display even with a hand that is not bare-handed (e.g., gloved hand). Further, the operation is intuitive for the user and is easy to perform.

Further, the whole display is used as the direction key and the confirmation key. Thus, as is different from operation buttons and operation keys in the related information processing terminals, the object of the operation by the user is not small, which eliminates the need of operation with fine movement. This solves the related problems of malfunction or difficulty in operations occurred in a user with large fingers or a user who is not good at fine movement or cannot perform fine movement at the same time. Further, this technique is expected to satisfy the requirements of universal design as well.

### (Configuration example of exemplary embodiment)

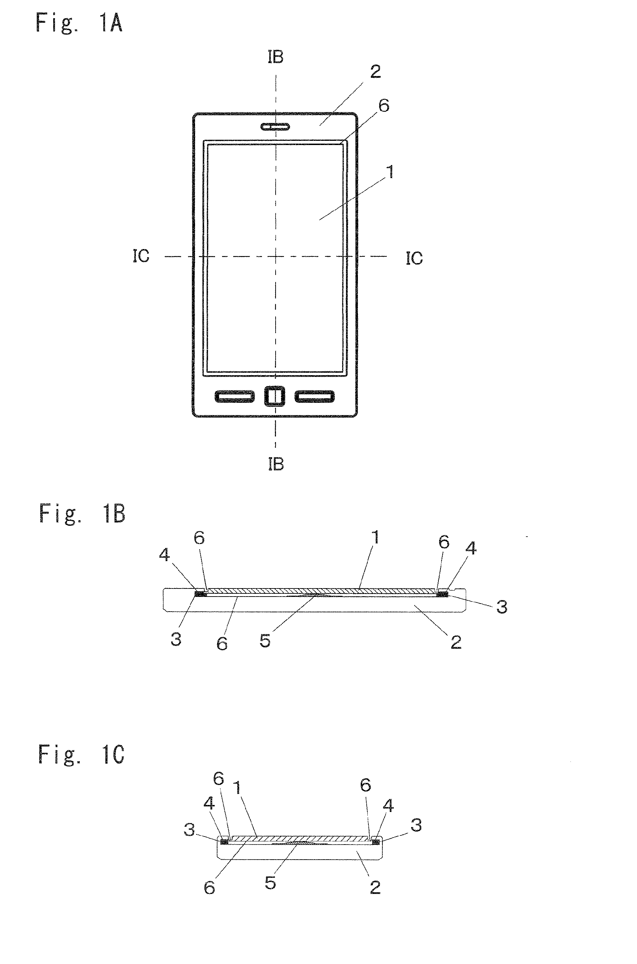

Next, an example of a structure of the information processing terminal according to the present invention will be described. Fig. 1 is a schematic diagram showing an example of the structure of the information processing terminal according to the present invention, and shows a portable information processing terminal as an example. Fig. 1A shows a front view of the information processing terminal, Fig. 1B is a cross-sectional view showing a cross-sectional structure taken along the line IB-IB that is parallel to side surfaces of the information processing terminal shown in Fig. 1A, and Fig. 1C is a cross-sectional view showing a cross-sectional structure taken along the line IC-IC that is parallel to the bottom surface of the information processing terminal shown in Fig. 1A.

As shown in the front view of Fig. 1A, the information processing terminal according to the present invention includes a display screen of a display 1 arranged so as to cover substantially the whole area of the upper surface side on a case of an information processing terminal body 2. Further, as shown in the cross-sectional view in Fig. 1B and the cross-sectional view in Fig. 1C, a sensor 3 to detect the moving distance, the movement direction, and the moving speed of the display 1 is arranged in each side of side wall surfaces of the information processing terminal body 2 opposed to each of the side surfaces of the display 1. The moving distance, the movement direction, and the moving speed of the display 1 detected by the sensors 3 are the relative moving distance, movement direction, and moving speed relative to the information processing terminal body 2, and each of the sensors 3 is formed of any of a piezoelectric element, an optical sensor, a magnetic sensor and the like, for example.

Described above in the cross-sectional views in Figs. 1B and 1C is the example in which the sensors 3 are arranged on the sides of the side wall surfaces of the information processing terminal body 2 opposed to the side surfaces of the display 1. However, the sensors 3 may be arranged on the sides of the side surfaces of the display 1, the side of the rear surface of the display 1, or the side of the upper surface of the information processing terminal body 2 opposed to the rear surface of the display 1.

Further, as shown in the front view of Fig. 1A, and the cross-sectional views of Figs. 1B and 1C, in order to allow the display 1 to slide in a desired parallel direction (e.g., left, right, up, down, or an oblique direction) toward the side wall surface of the information processing terminal body 2 along the upper surface of the information processing terminal body 2, and to allow the display 1 to move in the perpendicular direction to the side of the upper surface of the information processing terminal body 2, a space 6 is provided in each of the positions between the side surfaces of the display 1 (each side surface on the left, right, up, and down) and the side wall surfaces of the information processing terminal body 2, and between the rear surface of the display 1 and the upper surface of the information processing terminal body 2. Here, the space 6 provided in each side surface on the left, right, up, and down of the display 1 among the spaces 6 is arranged in such a way that, in the normal state in which no external force is applied to the display 1, the display 1 is positioned in the central position, and a gap with uniform width can be obtained with the side wall surfaces of the information processing terminal body 2 so that the maximum value of the slide moving distance in any parallel direction becomes substantially the same.

Further, as shown in the cross-sectional views of Figs. 1B and 1C, the side surfaces of the display 1 (each side surface on the left, right, up, and down) and the side wall surfaces of the information processing terminal body 2 are connected by elastic bodies 4 made of spring or rubber to return the display 1 which has slid in the parallel direction to its original central position in the information processing terminal body 2. Specifically, when there is no external force applied to the display 1 to slide the display 1 in the parallel direction along the upper surface of the information processing terminal body 2, the elastic bodies 4 allow the display 1 to keep the original position, which is the central position so that a gap of uniform width can be obtained with the side wall surfaces of the information processing terminal body 2 in each side surface on the left, right, up, and down of the display 1.

Shown in the cross-sectional views of Figs. 1B and 1C is an example in which the elastic body 4 is arranged in each of the side surfaces of left, right, up, and down of the display 1. However, when there is no external force applied to the display 1 to move the display 1 to the perpendicular direction toward the side of the upper surface of the information processing terminal body 2, the elastic body 4 may also be provided on the side of the rear surface of the display 1 so as to allow the display 1 to return to the original state.

Further, as shown in the cross-sectional views of Figs. 1B and 1C, a pressing force detector 5 is attached to a position on the upper surface of the information processing terminal body 2 opposed to a location near the center of the display 1 on the side of the rear surface to detect the pressing force applied from the front surface side of the display. The pressing force detector 5 is formed of a substrate including a metal dome (metallic plate spring), for example, and detects the state in which the rear surface side of the display 1 is pressed by the pressing force applied from the front surface side of the display 1. The pressing force detector 5 is not limited to the metal dome, but may be other various sensors such as a piezoelectric element, an optical sensor, a magnetic sensor or the like as long as it is able to detect such pressing force. Further, the pressing force detector 5 may be arranged near the center of the rear surface side of the display 1 instead of being arranged on the side of the upper surface of the information processing terminal body 2.

A user obliquely presses a location near the center of the front surface side of the display 1 with a finger to slide the display 1 so as to narrow the gap of the space 6 by any desired pressing force in any desired parallel direction (left, right, up, down, or oblique) while pressing the front surface of the display 1 in the perpendicular direction by appropriate pressing force. Then, the pressing force detector 5 and the sensors 3 detect the pressing force in the perpendicular direction and the parallel direction, execute a function of a direction key as an information processing terminal, to move the cursor position in the display screen of the display 1, the display screen, or the selection position of the icon in the display screen based on the moving distance, the movement direction, and the moving speed of the display 1 in the parallel direction. When the pressing force applied to the display 1 in the perpendicular direction is detected in a state in which there is little movement of the display 1 in the parallel direction, a function of a confirmation key is executed as the information processing terminal to confirm the selection of the selected item or the like in the current display position of the cursor. Note that the pressing operation by a finger to the front surface of the display 1 is not necessarily performed by a bare hand, but may be performed by a gloved hand.

### (Description of operation of exemplary embodiment)

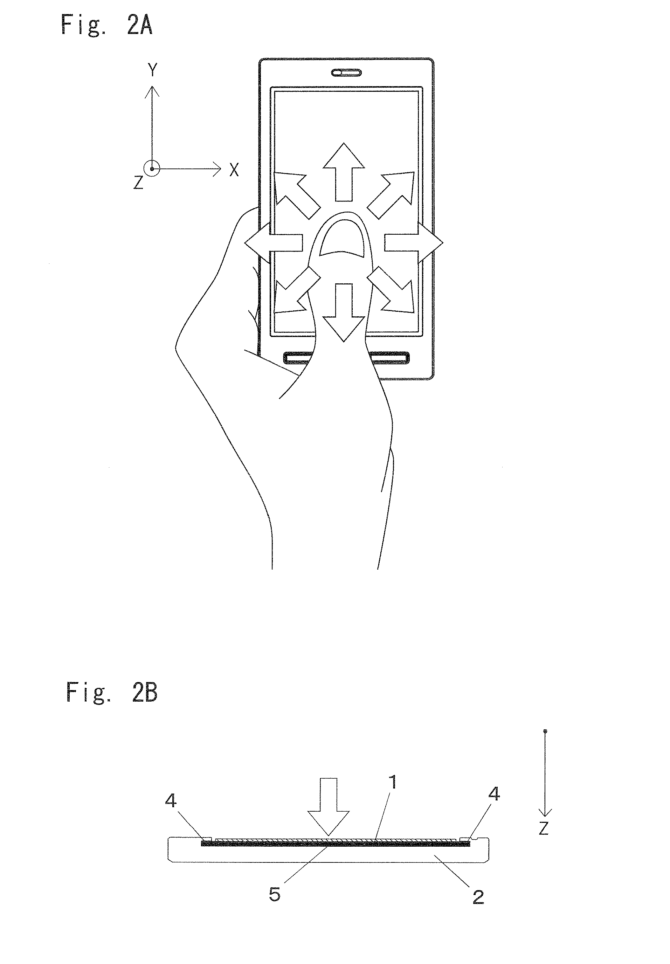

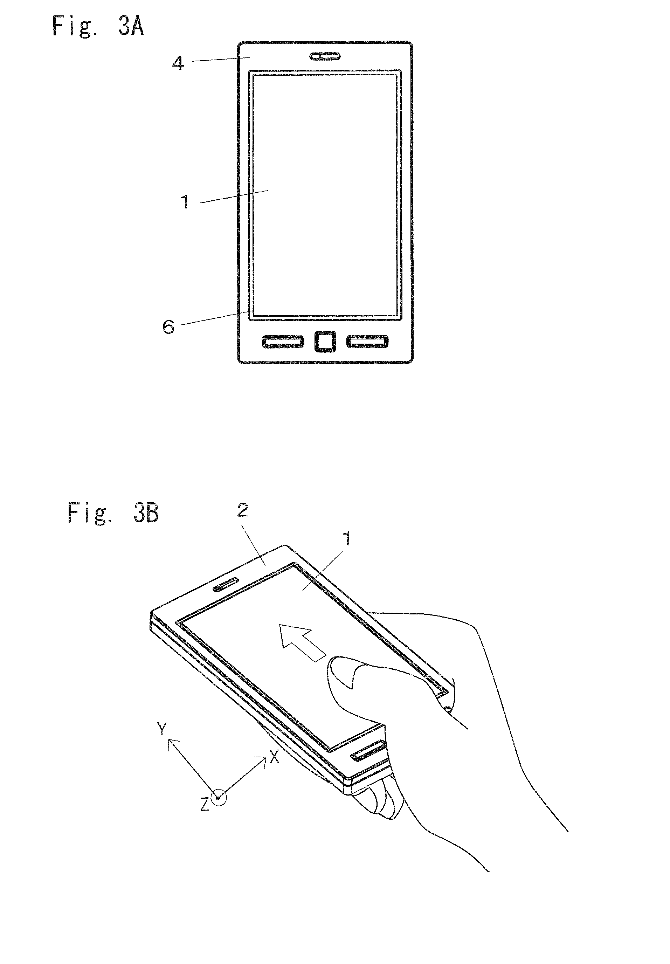

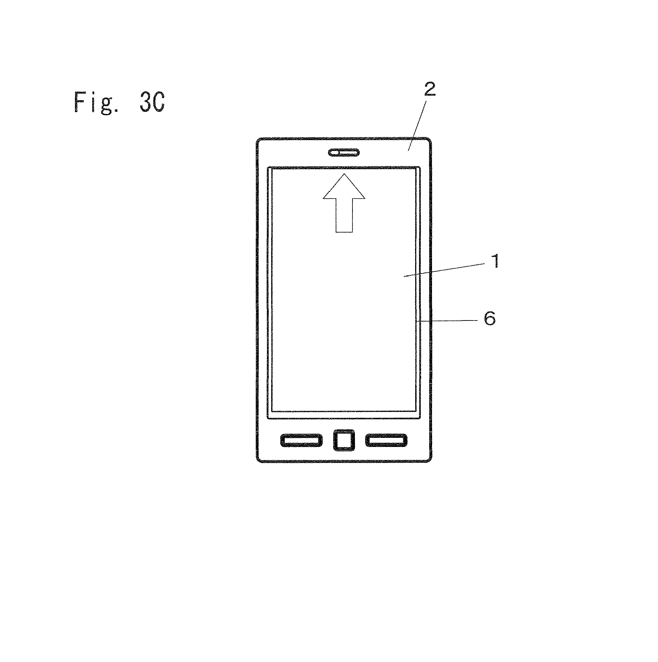

Next, an example of an operation of the information processing terminal shown in Fig. 1 will be described with reference to schematic diagrams shown in Figs. 2 and 3. Fig. 2 is a schematic diagram for describing an operation when a location near the center of the front surface side of the display 1 of the information processing terminal shown in Fig. 1 is pressed by a finger. Fig. 2A shows a state in which the user is able to slide the display 1 in any parallel direction (left, right, up, down, or oblique direction) along the upper surface of the information processing terminal body 2 while pushing by a finger a location near the center of the front surface side of the display 1. Fig. 2B shows a state in which the pressing force detector 5 detects the pressing force in the perpendicular direction when the user pushes a location near the center of the front surface side of the display 1 with a finger. It is assumed here that, as shown in Fig. 2A, the movement direction of the display 1 is as follows. The direction in the left side surface of the information processing terminal body 2 when the display 1 is slid in the parallel direction along the upper surface of the information processing terminal body 2 is an X axis, the direction in the upper side surface of the information processing terminal body 2 is a Y axis, and the direction in the upper surface of the information processing terminal body 2 when the display 1 is moved in the perpendicular direction toward the side of the upper surface of the information processing terminal body 2 is a Z axis.

Fig. 3 is a schematic diagram for describing an operation in a case in which a location near the center of the front surface side of the display 1 of the information processing terminal shown in Fig. 1 is pressed by a finger in the oblique direction, to move the display 1 to the upper direction. Fig. 3A shows an initial state in which no pushing force is applied to the display 1, Fig. 3B shows a state in which the user presses a location near the center of the front surface side of the display 1 in the oblique direction by a finger, and Fig. 3C shows a state in which, as a result of the pressing operation shown in Fig. 3B, the display 1 moves in the direction of the upper side wall surface of the information processing terminal body 2, and there is no space 6 between the upper side surface of the display 1 and the upper side wall surface of the information processing terminal body 2.

In the normal state, i.e., the initial state in which no pushing force is applied to the display 1 of the information processing terminal, as shown in Fig. 3A, the display 1 keeps the central position so as to obtain the gap with uniform width as the space 6 with each side wall surface of the information processing terminal body 2 in each side surface on the left, right, up, and down of the display 1 by the stress of the elastic body 4.

Now, as shown in Fig. 2A, the user presses with a thumb a location near the center of the front surface side of the display 1 in the lower surface (rear surface) direction, i.e., the perpendicular direction (Z axis direction), of the information processing terminal body 2 by an appropriate pressing force. Then, the user slides the display 1 so as to narrow the gap of the space 6 on the side of the side surface of the display 1 with a desired pressing force in any desired parallel direction of the vertical direction (Y axis direction), the horizontal direction (X axis direction), and the oblique direction while pressing the rear surface of the display 1 to the upper surface of the information processing terminal body 2. Then, the pressing force detector 5 arranged on the upper surface of the information processing terminal body 2 detects the pressing force in the Z axis direction of the display 1. Further, the sensor 3 arranged on the side wall surface of the information processing terminal body 2 detects the moving distance, the movement direction, and the moving speed of the display 1 in the X axis direction and the Y axis direction.

Upon receiving notification of the pressing force in the Z axis direction detected by the pressing force detector 5, and the moving distance, the movement direction, and the moving speed of the display 1 in the parallel direction (X axis and Y axis directions) detected by the sensor 3, a controller (not shown) of the information processing terminal body 2 executes a function of the direction key as the information processing terminal, converts the detected data into the movement of the cursor position of the display 1 in the display screen, the movement of the display screen, the movement of the selection position of the icon in the display screen and the like based on the moving distance, the movement direction, and the moving speed of the display 1 detected by the sensor 3, to control the display screen of the display 1.

When the controller of the information processing terminal body 2 receives the notification of the pressing force in the Z axis direction detected by the pressing force detector 5, and the moving distance, the movement direction, and the moving speed of the display 1 in the parallel direction (X axis and Y axis directions) detected by the sensor 3, if the moving distance of the display 1 detected by the sensor 3 is within a predetermined movement threshold as the moving distance to determine the significant sliding operation and it is determined that the user did not have an intention to slide the display 1 in the X axis direction or the Y axis direction, as shown in Fig. 2B, the controller determines that only the pressing force against the front surface of the display 1 in the perpendicular direction or the Z axis direction is detected. Then, the controller executes the function of the confirmation key as the information processing terminal, and executes the confirmation execution operation including selection, confirmation of the icon, start of the application that is selected and the like.

When the user stops the operation of pressing the front surface side of the display 1 and removes the finger from the front surface of the display 1, as shown in Fig. 3A, the stress of the elastic body 4 returns the display 1 to the central position so as to obtain a gap with uniform width as the space 6 with each side wall surface of the information processing terminal body 2 in each side surface on the left, right, up, and down of the display 1. In this way, when the user removes the finger from the front surface of the display 1 and the pressing force in the Z axis direction is cancelled in addition to the pressing force in the X axis and Y axis directions, the pressing force detector 5 does not detect the pressing force, and the sensor 3 does not at all detect the sliding. Then, the control operation of the display screen of the display 1 is stopped as well.

When it is desired, in Fig. 3, to select and confirm the icon located on the upper side in the display screen of the display 1, for example, to execute the application indicated by the icon, as shown in Fig. 3B, the user slides the display 1 in the upper direction, i.e., the Y axis direction of the information processing terminal body 2 by any pushing force along the upper surface of the information processing terminal body 2 while pressing by a finger any location near the center of the front surface side of the display 1. As a result, as shown in Fig. 3C, the display 1 moves in the upper direction, i.e., the Y axis direction of the information processing terminal body 2, which eliminates the space 6 between the upper side surface of the display 1 and the upper side wall surface of the information processing terminal body 2.

According to such a pressing operation by the user, the pressing force detector 5 arranged in the upper surface of the information processing terminal body 2 detects the pushing in the Z axis direction. In addition, the sensor 3 arranged in the side wall surface of the information processing terminal body 2 detects the movement of the display 1 in the upper direction, the moving distance, and the moving speed. When it is determined that the moving distance in the parallel direction detected by the sensor 3 exceeds a predetermined movement threshold, the controller performs control to move the cursor in the display screen of the display 1 in the upper direction, i.e., the Y axis direction. As long as the slide operation of the display 1 in the upper direction, i.e., the Y axis direction of the information processing terminal body 2 is continued, the controller performs such a control as to continuously move the cursor in the display screen of the display 1 in the upper direction, i.e., the Y axis direction.

As a result of the sliding operation of the display 1 in the upper direction, i.e., the Y axis direction of the information processing terminal body 2, when the cursor is moved on the icon which is desired to be selected, the user switches the pressing operation on the display 1 in the oblique direction to the pressing operation in the perpendicular direction. Specifically, the user stops the sliding operation on the display 1, and performs the pressing operation on the display 1 only in the perpendicular direction, i.e., the Z axis direction of the information processing terminal body 2. Then, the moving distance of the display 1 in the parallel direction by the sensor 3 is within the movement threshold, and the pushing in the Z axis direction is detected by the pressing force detector 5. Further, in the controller, the selection of the icon on the display screen that is currently selected by the cursor is confirmed, resulting in the start of the application indicated by the icon.

While the present invention has been described as a hardware configuration in the exemplary embodiment stated above, the present invention is not limited to this. The present invention may achieve any processing by causing a CPU (Central Processing Unit) to execute a computer program. Further, the program mentioned above can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (programmable ROM), EPROM (Erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

Described above is the configuration of the preferable exemplary example of the present invention. It should be noted, however, such exemplary example is merely an example of the present invention, and does not limit the present invention. One of ordinary skilled in the art would easily understand that various changes and modifications may be made according to the specific application without departing from the spirit of the present invention.

This application claims the benefit of priority, and incorporates herein by reference in its entirety, the following Japanese Patent Application No. 2010-110008 filed on May 12, 2010.

### Reference Signs List

- 1: DISPLAY
- 2: INFORMATION PROCESSING TERMINAL BODY
- 3: SENSOR
- 4: ELASTIC BODY
- 5: PRESSING FORCE DETECTOR
- 6: SPACE

## Claims

1. An information processing terminal at least comprising a display on an upper surface of an information processing terminal body, comprising an elastic body connecting a rear surface of the display and an upper surface of the information processing terminal body, and each side surface of the display and each side wall surface of the information processing terminal body opposed to each side surface of the display via a space in which the display is movable,
wherein the information processing terminal at least executes one of a function as a direction key and a function as a confirmation key by a user pressing the display with a finger, the direction key being to move a cursor on a display screen of the display and the display screen, and the confirmation key being to confirm selection on the display screen of the display.

2. The information processing terminal according to Claim 1,
wherein one of the upper surface of the information processing terminal body and the rear surface of the display includes pressing force detection means for detecting that a front surface of the display has been pressed by the finger of the user and the rear surface of the display has moved to a side of the upper surface of the information processing terminal body, and any one of the side wall surface of the information processing terminal body, the upper surface of the information processing terminal body, the side surface of the display, and the rear surface of the display includes movement detection means for detecting that the front surface of the display has been pressed in an oblique direction by the finger of the user and the display has slid in any direction of the side wall surfaces of the information processing terminal body along the upper surface of the information processing terminal body, and when the pressing force detection means detects movement of the display to the side of the upper surface of the information processing terminal body and the movement detection means detects sliding of the display in any direction of the side wall surfaces of the information processing terminal body, if the moving distance detected by the movement detection means exceeds a predetermined movement threshold, the function as the direction key is executed, and if the moving distance detected by the movement detection means is within the movement threshold, the function as the confirmation key is executed.

3. The information processing terminal according to Claim 2, wherein, the display is able to be slid in all directions including a vertical direction, a horizontal direction, and an oblique direction to the side wall surfaces of the information processing terminal body when the user presses the front surface of the display in the oblique direction with the finger and the display slides in a direction of the side wall surface of the information processing terminal body along the upper surface of the information processing terminal body, and the movement detection means is able to detect the movement direction, the moving distance, and the moving speed of the display which has slid.

4. The information processing terminal according to Claim 2 or 3, wherein the movement detection means is formed of any one of a piezoelectric element, an optical sensor, and a magnetic sensor.

5. The information processing terminal according to any one of Claims 2 to 4, wherein the pressing force detection means is formed of any one of a metal dome, a piezoelectric element, an optical sensor, and a magnetic sensor.

6. A terminal operation method in an information processing terminal at least comprising a display on an upper surface of an information processing terminal body, comprising providing a space between a rear surface of the display and an upper surface of the information processing terminal body, and each side surface of the display and each side wall surface of the information processing terminal body opposed to each side surface of the display to allow the display to be movable, and at least executing one of a function as a direction key and a function as a confirmation key by a user pressing the display with a finger, the direction key being to move a cursor on a display screen of the display and the display screen, and the confirmation key being to confirm selection on the display screen of the display.

7. The terminal operation method according to Claim 6, wherein, when it is detected that the rear surface of the display has moved to a side of the upper surface of the information processing terminal body by the user pressing the display with the finger and that the display has slid in any direction of the side wall surfaces of the information processing terminal body along the upper surface of the information processing terminal body, the function as the direction key is executed when the moving distance of sliding in any direction of the side wall surfaces of the information processing terminal body exceeds a predetermined moving threshold, and the function as the confirmation key is executed when the moving distance of sliding in any direction of the side wall surfaces of the information processing terminal body is within the movement threshold.

8. A non-transitory computer readable medium storing a terminal operation program, comprising executing the terminal operation method disclosed in Claim 6 or 7 as a program that can be executed by a computer.
